# EUROPÄISCHE PATENTANMELDUNG

(11) **EP 4 850 986 A1**
(43) Veröffentlichungstag der Anmeldung: **09.12.2026**
(21) Anmeldenummer: 26172911.5
(22) Anmeldetag: 16.04.2026
(51) Int. Cl.: B60R 13/10

(54) **KENNZEICHENHALTER MIT KLEMMLEISTE**

(30) Priorität: 03.06.2025 AT 80032026
(71) Anmelder: Sanube GmbH, 4776 Diersbach (AT)
(72) Erfinder: Sallaberger, Stefan, 4776 Diersbach (AT)
(74) Vertreter: KLIMENT & HENHAPEL

(57) **Zusammenfassung**

Kennzeichenhalter für ein Kraftfahrzeugkennzeichen (6) mit einer Befestigungsplatte (1) zur Befestigung am Kraftfahrzeug und Klemmelementen (2) zur Befestigung des in seiner Kennzeichenlänge und seiner Kennzeichenhöhe genormten Kraftfahrzeugkennzeichens (6) an der Befestigungsplatte (1), wobei eine obere Reihe horizontal verteilt angeordneter Klemmelemente (2o) und eine untere Reihe horizontal verteilt angeordneter Klemmelemente (2u) vorgesehen sind, die in ihrem vertikalen Abstand einen der Kennzeichenhöhe entsprechenden, vertikalen Klemmabstand (A) definieren. Es wird vorgeschlagen, dass eine den Klemmabstand (A) verringernde Klemmleiste (4) vorgesehen ist, die im Bereich der oberen oder unteren Reihe der Klemmelemente (2) an der Befestigungsplatte (1) befestigbar ist und mit jeweils funktionsgleichen Klemmelementen (2) versehen ist.

## Beschreibung

Die Erfindung betrifft einen Kennzeichenhalter für ein Kraftfahrzeugkennzeichen mit einer Befestigungsplatte zur Befestigung am Kraftfahrzeug und Klemmelementen zur Befestigung des in seiner Kennzeichenlänge und seiner Kennzeichenhöhe genormten Kraftfahrzeugkennzeichens an der Befestigungsplatte, wobei eine obere Reihe horizontal verteilt angeordneter Klemmelemente und eine untere Reihe horizontal verteilt angeordneter Klemmelemente vorgesehen sind, die in ihrem vertikalen Abstand einen der Kennzeichenhöhe entsprechenden, vertikalen Klemmabstand definieren, gemäß dem Oberbegriff von Anspruch 1.

Kennzeichenhalter der eingangs genannten Art, auch Nummernschildhalterungen genannt, werden zumeist aus Kunststoff hergestellt und dienen der Befestigung des Kraftfahrzeugkennzeichens an einem Kraftfahrzeug. Sie weisen eine Befestigungsplatte auf, mit der der Kennzeichenhalter am Kraftfahrzeug dauerhaft befestigt werden kann, sowie Klemmelemente zur vorübergehenden Befestigung des Kraftfahrzeugkennzeichens an der Befestigungsplatte. Der Kennzeichenhalter soll dabei eine sichere und feste Befestigung des Kraftfahrzeugkennzeichens am Kennzeichenhalter erlauben, aber auch eine Austauschbarkeit, um das Kennzeichen bei Bedarf wechseln zu können.

Eine übliche Art der Befestigung von Kennzeichen am Kennzeichenhalter sieht hierfür eine obere Reihe horizontal verteilt angeordneter Klemmelemente und eine untere Reihe horizontal verteilt angeordneter Klemmelemente vor, die in ihrem vertikalen Abstand einen der Kennzeichenhöhe entsprechenden, vertikalen Klemmabstand definieren. Die Klemmelemente der oberen Reihe sind etwa als starre Klemmelemente ausgeführt, und die Klemmelemente der unteren Reihe als federnde Klemmelemente. Zur Montage des Kennzeichens wird dabei die obere Randkante des Kennzeichens in eine Haltenut zwischen den starren Klemmelementen und der Befestigungsplatte eingesetzt, und danach die untere Randkante des Kennzeichens gegen die rückstellende Kraft der federnden Klemmelemente der unteren Reihe zur Befestigungsplatte gedrückt, bis das Kennzeichen mit seiner unteren Randkante in eine Haltenut zwischen den federnden Klemmelementen und der Befestigungsplatte einrastet. Das Kennzeichen wird somit sicher an der Befestigungsplatte gehalten, wobei an einer unteren Randkante der Befestigungsplatte zumeist auch ein aus der Befestigungsplatte vorkragender unterer Rahmenteil vorgesehen ist, an dem die untere Reihe der Klemmelemente angeordnet ist und auf der sich das montierte Kennzeichen stützt. Zudem ist an einer oberen Randkante der Befestigungsplatte zumeist auch ein aus der Befestigungsplatte vorkragender oberer Rahmenteil vorgesehen, an dem die obere Reihe der Klemmelemente angeordnet sein kann.

Die Länge der Befestigungsplatte ist an die Länge des Kennzeichens angepasst, und der vertikale Abstand der oberen Reihe und der unteren Reihe der Klemmelemente entspricht der Kennzeichenhöhe. Kraftfahrzeugkennzeichen sind in ihrer Kennzeichenlänge und ihrer Kennzeichenhöhe zwar genormt, allerdings nicht in jedem Land auf dieselben Werte. So sind etwa in der Europäischen Union für zweispurige Fahrzeuge zwei unterschiedliche Normhöhen geläufig, nämlich eine Kennzeichenhöhe von 120mm beispielsweise für österreichische Kennzeichen, und eine Kennzeichenhöhe von 110mm beispielsweise für deutsche Kennzeichen. Für unterschiedliche Kennzeichenhöhen können unterschiedliche Kennzeichenhalter verwendet werden.

Um hingegen denselben Kennzeichenhalter für beide Normhöhen verwenden zu können ist es bekannt die oberen und unteren Klemmelemente in ihrem Normalabstand verstellbar auszuführen, sodass sie auf unterschiedliche Kennzeichenhöhen eingestellt werden können. Das wird beispielsweise mithilfe verschiebbarer Klemmelemente bewerkstelligt, beispielsweise mithilfe verschiebbarer oberer Klemmelemente, die mithilfe eines Gummibandes gegen die unteren Klemmelemente spannbar sind ("Slider"). Die so ausgeführten Kennzeichenhalter sind auf unterschiedliche Kennzeichenhöhen flexibel einstellbar, allerdings besteht die Gefahr, dass während der Fahrt das Gummiband reißt und das Kennzeichen somit verloren geht.

Es ist daher das Ziel der Erfindung einen Kennzeichenhalter bereitzustellen, der auf unterschiedliche Kennzeichenhöhen einstellbar ist, ohne dabei auf reißanfällige Elemente wie Gummibänder und dergleichen zurückgreifen zu müssen.

Diese Ziele werden durch die Merkmale von Anspruch 1 erreicht. Anspruch 1 bezieht sich auf einen Kennzeichenhalter für ein Kraftfahrzeugkennzeichen mit einer Befestigungsplatte zur Befestigung am Kraftfahrzeug und - Klemmelementen zur Befestigung des in seiner Kennzeichenlänge und seiner Kennzeichenhöhe genormten Kraftfahrzeugkennzeichens an der Befestigungsplatte, wobei eine obere Reihe horizontal verteilt angeordneter Klemmelemente und eine untere Reihe horizontal verteilt angeordneter Klemmelemente vorgesehen sind, die in ihrem vertikalen Abstand einen der Kennzeichenhöhe entsprechenden, vertikalen Klemmabstand definieren. Erfindungsgemäß wird hierbei vorgeschlagen, dass eine den Klemmabstand verringernde Klemmleiste vorgesehen ist, die im Bereich der oberen oder unteren Reihe der Klemmelemente an der Befestigungsplatte befestigbar ist und mit jeweils funktionsgleichen Klemmelementen versehen ist. Der Kennzeichenhalter ist zunächst in herkömmlicher Weise wie eingangs beschrieben auf Kennzeichen einer ersten, größeren Kennzeichenhöhe ausgelegt, beispielsweise auf eine Kennzeichenhöhe von 120 mm. Falls der Kennzeichenhalter für Kennzeichen einer zweiten, geringeren Kennzeichenhöhe, beispielsweise 110 mm verwendet werden soll, besteht erfindungsgemäß die Lösung in einer Klemmleiste, die an der Befestigungsplatte im Bereich der oberen oder unteren Reihe der Klemmelemente befestigt werden kann und mit jeweils funktionsgleichen Klemmelementen versehen ist. Diese Klemmleiste verringert den Klemmabstand zwischen der oberen und unteren Reihe an Klemmelementen derart, dass der Klemmabstand nach Befestigung der Klemmleiste nun der zweiten, geringeren Kennzeichenhöhe, beispielsweise 110 mm, entspricht, sodass Kennzeichen der zweiten, geringeren Kennzeichenhöhe befestigt werden können. Die Erfindung stellt somit eine konstruktiv einfache und kostengünstige Lösung dar einen Kennzeichenhalter auf unterschiedliche Kennzeichenhöhen anpassen zu können, ohne dabei auf reißanfällige Elemente wie Gummibänder und dergleichen zurückgreifen zu müssen.

Zur Befestigung der Klemmleiste wird vorzugsweise vorgeschlagen, dass die Klemmleiste mit Rastelementen versehen ist, und die Befestigungsplatte mit den Rastelementen jeweils zugeordneten Rastöffnungen versehen ist. Eine solche Befestigung kann auch lösbar ausgeführt sein, sodass die Klemmleiste auch wieder zerstörungsfrei von der Befestigungsplatte gelöst werden kann.

Erfindungsgemäß ist die Klemmleiste im Bereich der oberen oder unteren Reihe der Klemmelemente an der Befestigungsplatte zu befestigen. Insbesondere wird hierbei vorgeschlagen, dass die Klemmleiste mit ihrer Leistenlänge die obere oder untere Reihe von Klemmelementen abdeckt und zu den abgedeckten Klemmelementen funktionsgleichen Klemmelementen versehen ist. Die abgedeckten Klemmelemente sind somit nicht mehr sichtbar und werden von den Klemmelementen der Klemmleiste, die einen geringeren Klemmabstand definieren, funktionsgleich ersetzt.

Insbesondere kann dabei vorgesehen sein, dass die Leistenlänge der Klemmleiste der horizontalen Länge der Befestigungsplatte entspricht, um optisch ansprechende Lösungen verwirklichen zu können.

Gemäß einer bevorzugten Ausführungsvariante wird vorgeschlagen, dass die Klemmleiste entlang einer unteren Randkante der Befestigungsplatte an einem aus der Befestigungsplatte vorkragenden unteren Rahmenteil angeordnet ist. Ein solcher aus der Befestigungsplatte vorkragender unterer Rahmenteil ist zumeist bei herkömmlichen Kennzeichenhaltern ohnehin vorgesehen. Auf diese Weise bleibt die Klemmleiste unauffällig und kann an das Design des Kennzeichenhalters angepasst werden. Die Klemmleiste kann zudem auch für Logos, Werbeaufschriften und dergleichen verwendet werden.

Da der untere Rahmenteil herkömmlicher Kennzeichenhalter zumeist mit federnden Klemmelementen versehen ist, wird vorgeschlagen die Klemmleiste mit federnden Klemmelementen zu versehen. Eine solche Klemmleiste kann somit im Bereich des unteren Rahmenteils verwendet werden. Sie deckt dabei die zuvor vorgesehenen unteren Klemmelemente ab und stellt neue Klemmelemente mit derselben Funktion aber mit einem geringeren Klemmabstand bereit.

Die Erfindung wird in weiterer Folge anhand von Ausführungsbeispielen mithilfe der beiliegenden Figuren näher erläutert. Es zeigen hierbei die
Fig. 1 eine perspektivische Ansicht einer Ausführungsform eines Kennzeichenhalters ohne Klemmleiste mit Blick auf die untere Reihe der Klemmelemente,
Fig. 2 eine weitere perspektivische Ansicht der Ausführungsform des Kennzeichenhalters ohne Klemmleiste gemäß Fig. 1 mit Blick auf die obere Reihe der Klemmelemente,
Fig. 3 eine perspektivische Ansicht des Kennzeichenhalters gemäß Fig. 1 und 2 mit Klemmleiste mit Blick auf die untere Reihe der Klemmelemente mit verringertem Klemmabstand,
Fig. 4 eine Vorderansicht des Kennzeichenhalters mit Klemmleiste gemäß Fig. 3,
Fig. 5 eine Vorderansicht einer Ausführungsform einer erfindungsgemäßen Klemmleiste gemäß Fig. 4,
Fig. 6 eine perspektivische Vorderansicht der Klemmleiste gemäß Fig. 5,
Fig. 7 eine perspektivische Rückansicht der Klemmleiste gemäß Fig. 5 mit Blick auf die Rastelemente,
Fig. 8 eine Rückansicht des Kennzeichenhalters mit montierter Klemmleiste gemäß der Fig. 3 und 4,
Fig. 9 eine Schnittansicht des Kennzeichenhalters ohne Klemmleiste gemäß der Fig. 1 und 2, und die
Fig. 10 eine Schnittansicht des Kennzeichenhalters mit montierter Klemmleiste gemäß der Fig. 3 und 4.

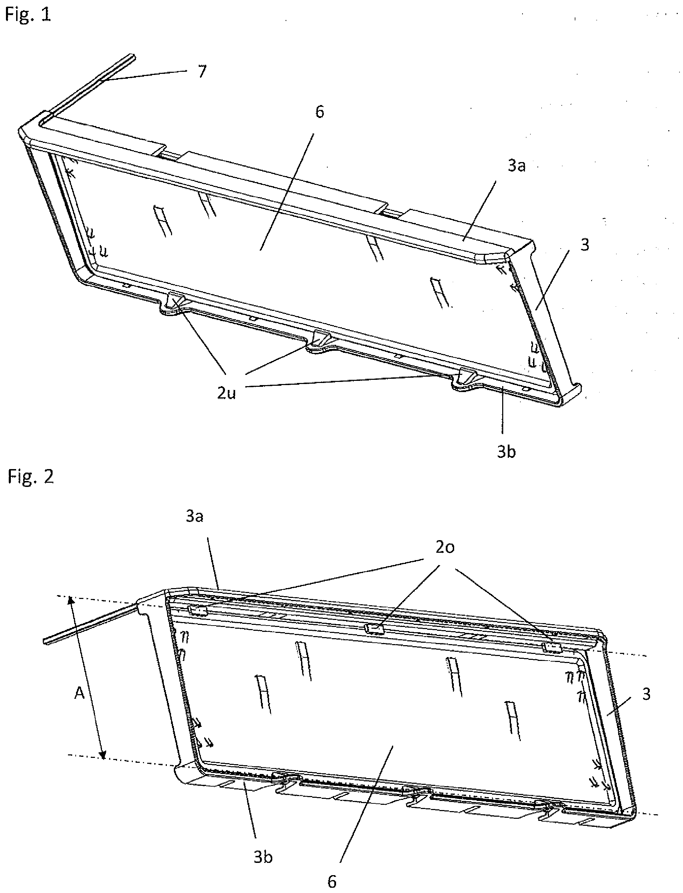

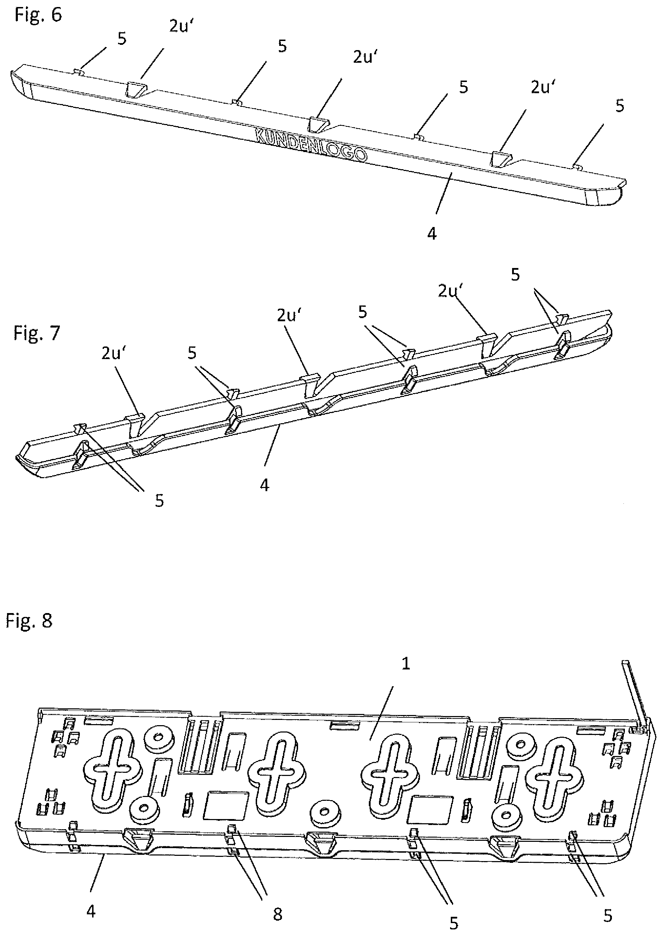

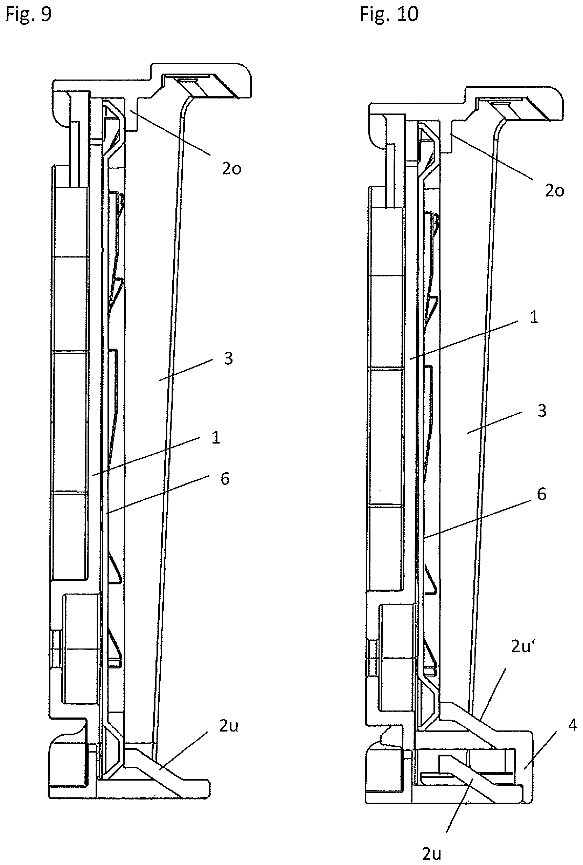

Zunächst wird auf die Fig. 1 und 2 Bezug genommen, die eine Ausführungsform eines herkömmlichen Kennzeichenhalters zeigen. Der Kennzeichenhalter umfasst eine Befestigungsplatte 1 (siehe auch Fig. 8-10) zur Befestigung am Kraftfahrzeug und Klemmelemente 2 zur Befestigung eines Kraftfahrzeugkennzeichens 6 an der Befestigungsplatte 1 (siehe Fig. 9 und 10). In der gezeigten Ausführungsform weist die Befestigungsplatte 1 eine rechteckige Kontur auf, an deren Randkanten ein umlaufender Rahmen 3 aus der Befestigungsplatte 1 vorkragt. Der im Umfangsbereich der Befestigungsplatte 1 umlaufende Rahmen 3 stellt einen Schmutz- und Witterungsschutz für das montierte Kraftfahrzeugkennzeichen 6 dar. Zur Befestigung von Kraftfahrzeugkennzeichen 6 am Kennzeichenhalter sind eine obere Reihe horizontal verteilt angeordneter Klemmelemente 2o und eine untere Reihe horizontal verteilt angeordneter Klemmelemente 2u vorgesehen, die in ihrem vertikalen Abstand einen der Kennzeichenhöhe entsprechenden, vertikalen Klemmabstand A definieren. Die Klemmelemente 2o der oberen Reihe sind etwa als starre Klemmelemente 2o ausgeführt und im Bereich eines oberen Rahmenteils 3a angeordnet, und die Klemmelemente 2u der unteren Reihe sind als federnde Klemmelemente 2u ausgeführt und im Bereich eines unteren Rahmenteils 3b angeordnet. Der Kennzeichenhalter weist zudem auch eine Kennzeichenbeleuchtung mit einem Versorgungskabel 7 auf, das auf der dem Rahmenteil 3a abgewandten Seite der Befestigungsplatte 1 angeordnet ist.

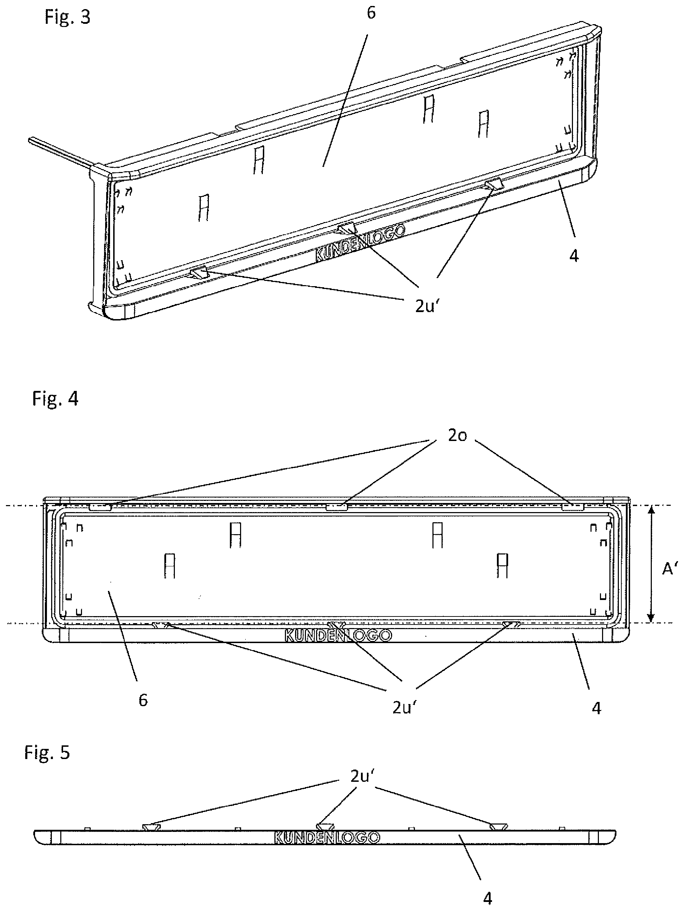

In den Fig. 3 und 4 ist der Kennzeichenhalter gemäß Fig. 1 und 2 mit einer Klemmleiste 4 versehen. Die Klemmleiste 4 ist entlang der unteren Randkante der Befestigungsplatte 1 an dem aus der Befestigungsplatte vorkragenden unteren Rahmenteil 3b angeordnet. Die Leistenlänge der Klemmleiste 4 entspricht im gezeigten Ausführungsbeispiel der horizontalen Länge des unteren Rahmenteils 3b. Die Breite der Klemmleiste 4 entspricht zudem der senkrecht zur Befestigungsplatte 1 gemessenen Tiefe des unteren Rahmenteils 3b, oder überragt sie etwas. Auf diese Weise bleibt die Klemmleiste 4 unauffällig und kann an das Design des Kennzeichenhalters angepasst werden. Die Klemmleiste 4 kann zudem auch für Logos, Werbeaufschriften und dergleichen verwendet werden.

Da der untere Rahmenteil 3b mit federnden Klemmelementen 2u versehen ist, weist die Klemmleiste 4 funktionsgleiche federnde Klemmelemente 2u' auf. Die Klemmleiste 4 deckt dabei die zuvor vorgesehenen unteren Klemmelemente 2u ab und stellt neue Klemmelemente 2u' mit derselben Funktion aber mit einem geringeren Klemmabstand A' bereit (siehe Fig. 4).

In den Fig. 5-7 ist die Klemmleiste 4 im Detail dargestellt. Die Klemmleiste 4 ist mit Rastelementen 5 versehen, denen jeweils Rastöffnungen 8 der Befestigungsplatte 1 zugeordnet sind (siehe auch Fig. 8). Die Rastelemente 4 können in die Rastöffnungen 8 einrasten und die Klemmleiste 4 somit an der Befestigungsplatte 1 befestigen. Eine solche Befestigung kann auch lösbar ausgeführt sein, sodass die Klemmleiste 4 auch wieder zerstörungsfrei von der Befestigungsplatte 1 gelöst werden kann. Ferner sind die federnden Klemmelemente 2u' ersichtlich, die nach der Montage der Klemmleiste 4 am Kennzeichenhalter die zuvor vorgesehenen unteren Klemmelemente 2u abdecken und dabei neue Klemmelemente 2u' mit derselben Funktion aber mit einem geringeren Klemmabstand A' bereitstellen.

Die Fig. 8 zeigt eine Rückansicht des Kennzeichenhalters mit montierter Klemmleiste 4 gemäß der Fig. 3 und 4.

In der Fig. 9 ist eine Schnittansicht des Kennzeichenhalters ohne Klemmleiste 4 gemäß der Fig. 1 und 2 dargestellt. Zur Montage des Kraftfahrzeugkennzeichens 6 wird die obere Randkante des Kraftfahrzeugkennzeichens 6 in eine Haltenut zwischen den starren Klemmelementen 2o der oberen Reihe der Klemmelemente 2 und der Befestigungsplatte 1 eingesetzt, und danach die untere Randkante des Kraftfahrzeugkennzeichens 6 gegen die rückstellende Kraft der federnden Klemmelemente 2u der unteren Reihe der Klemmelemente 2 zur Befestigungsplatte 1 gedrückt, bis das Kraftfahrzeugkennzeichen 6 mit seiner unteren Randkante in eine Haltenut zwischen den federnden Klemmelementen 2u und der Befestigungsplatte 1 einrastet.

In der Fig. 10 ist im Vergleich dazu eine Schnittansicht des Kennzeichenhalters mit montierter Klemmleiste 4 gemäß der Fig. 3 und 4 dargestellt. Zur Montage des Kraftfahrzeugkennzeichens 6 wird hierbei die obere Randkante des Kraftfahrzeugkennzeichens 6 wiederum in eine Haltenut zwischen den starren Klemmelementen 2o der oberen Reihe der Klemmelemente 2 und der Befestigungsplatte 1 eingesetzt. Bei montierter Klemmleiste 4 wird danach hingegen die untere Randkante des Kraftfahrzeugkennzeichens 6 gegen die rückstellende Kraft der federnden Klemmelemente 2u' der Klemmleiste 4 zur Befestigungsplatte 1 gedrückt, bis das Kraftfahrzeugkennzeichen 6 mit seiner unteren Randkante in eine Haltenut zwischen den federnden Klemmelementen 2u' der Klemmleiste 4 und der Befestigungsplatte 1 einrastet.

Mit der erfindungsgemäßen Klemmleiste 4 gelingt es den Klemmabstand A zwischen der oberen und unteren Reihe an Klemmelementen 2 derart zu verringern, dass der Klemmabstand A' nach Befestigung der Klemmleiste 4 nun einer zweiten, geringeren Kennzeichenhöhe, beispielsweise 110 mm, entspricht, sodass Kraftfahrzeugkennzeichen 6 der zweiten, geringeren Kennzeichenhöhe befestigt werden können. Die Erfindung stellt somit eine konstruktiv einfache und kostengünstige Lösung dar einen Kennzeichenhalter auf unterschiedliche Kennzeichenhöhen anpassen zu können, ohne dabei auf reißanfällige Elemente wie Gummibänder und dergleichen zurückgreifen zu müssen.

## Patentansprüche

1. Kennzeichenhalter für ein Kraftfahrzeugkennzeichen (6) mit einer Befestigungsplatte (1) zur Befestigung am Kraftfahrzeug und Klemmelementen (2) zur Befestigung des in seiner Kennzeichenlänge und seiner Kennzeichenhöhe genormten Kraftfahrzeugkennzeichens (6) an der Befestigungsplatte (1), wobei eine obere Reihe horizontal verteilt angeordneter Klemmelemente (2o) und eine untere Reihe horizontal verteilt angeordneter Klemmelemente (2u) vorgesehen sind, die in ihrem vertikalen Abstand einen der Kennzeichenhöhe entsprechenden, vertikalen Klemmabstand (A) definieren, **dadurch gekennzeichnet, dass** eine den Klemmabstand (A) verringernde Klemmleiste (4) vorgesehen ist, die im Bereich der oberen oder unteren Reihe der Klemmelemente (2) an der Befestigungsplatte (1) befestigbar ist und mit jeweils funktionsgleichen Klemmelementen (2) versehen ist.

2. Kennzeichenhalter nach Anspruch 1, **dadurch gekennzeichnet, dass** die Klemmleiste (4) zur Befestigung an der Befestigungsplatte (1) mit Rastelementen (5) versehen ist, und die Befestigungsplatte (1) mit den Rastelementen (5) jeweils zugeordneten Rastöffnungen (8) versehen ist.

3. Kennzeichenhalter nach Anspruch 1 oder 2, **dadurch gekennzeichnet, dass** die Klemmleiste (4) mit ihrer Leistenlänge die obere oder untere Reihe von Klemmelementen (2) abdeckt und mit zu den abgedeckten Klemmelementen (2) funktionsgleichen Klemmelementen (2) versehen ist.

4. Kennzeichenhalter nach einem der Ansprüche 1 bis 3, **dadurch gekennzeichnet, dass** die Leistenlänge der Klemmleiste (4) der horizontalen Länge der Befestigungsplatte (1) entspricht.

5. Kennzeichenhalter nach einem der Ansprüche 1 bis 4,
**dadurch gekennzeichnet, dass** die Klemmleiste (4) entlang einer unteren Randkante der Befestigungsplatte (1) an einem aus der Befestigungsplatte (1) vorkragenden unteren Rahmenteil (3b) angeordnet ist.

6. Kennzeichenhalter nach einem der Ansprüche 1 bis 5, **dadurch gekennzeichnet, dass** die Klemmleiste (4) mit federnden Klemmelementen (2u') versehen ist.
